# EUROPÄISCHE PATENTSCHRIFT

(11) **EP 0 305 874 B1**
(45) Veröffentlichungstag und Bekanntmachung des Hinweises auf die Patenterteilung: **21.04.1993**
(21) Anmeldenummer: 88113764.0
(22) Anmeldetag: 24.08.1988
(51) Int. Cl.: B29C 47/00, B29C 47/90, B29C 55/28

(54) **Verfahren und Vorrichtung zur Herstellung eines stranggepressten, verstreckten, nahtlosen Schlauches**
Method and apparatus for manufacturing an extruded stretched and seamless tube
Procédé et dispositif de fabrication d'un tuyau flexible extrudé, étiré et sans soudure

(30) Priorität: 03.09.1987 DE 3729449
(43) Veröffentlichungstag der Anmeldung: 08.03.1989
(73) Patentinhaber: HOECHST AKTIENGESELLSCHAFT, 65926 Frankfurt am Main (DE)
(72) Erfinder: Strutzel, Hans, D-6200 Wiesbaden (DE); Wink, Peter, Techn. Ang., D-6200 Wiesbaden (DE)

(56) Entgegenhaltungen:
- EP-A- 0 209 933
- CH-A- 396 401
- CH-A- 611 549
- DE-A- 1 504 050
- DE-B- 2 941 059
- FR-A- 1 568 085
- FR-A- 2 099 499
- FR-A- 2 505 247
- GB-A- 1 064 573
- US-A- 3 814 785
- US-A- 4 034 055
- US-A- 4 093 412

## Beschreibung

Die Erfindung betrifft ein Verfahren und eine Vorrichtung zur Herstellung eines stranggepreßten, verstreckten, nahtlosen Schlauches aus teilkristallinen Polymeren, der in einem Arbeitsgang kontinuierlich außenkalibriert wird, wobei ein Vorschlauch von einer Ringdüse, einer Strangpresse vertikal durch einen Kalibrator und eine Vakuumzone geführt und zu einem Rohr geformt wird, das unterhalb der Vakuumzone gekühlt wird und an der Rohraußenseite in der Vakuumzone ein Unterdruck pa₁ kleiner als der Atmosphärendruck pₐₜₘ herrscht.

Ein derartiges Verfahren und eine entsprechende Vorrichtung sind aus dem Dokument FR-A 1.568.085 bekannt, in dem eine Vorrichtung zum Herstellen eines biaxial orientierten Schlauches aus thermoplastischem Kunststoff beschrieben ist. Bei dieser Vorrichtung ist zwischen einem Dorn und einem Düsenkörper ein Ringspalt ausgebildet, dem eine Kalibrierdüse nachgeschaltet ist, die mit einer Kühlvorrichtung für den Schlauch verbunden ist. An dem Dorn ist ein Stützrohr befestigt, dessen anderes Ende mit einem Dichtkörper verbunden ist, der in der Nähe der Austrittsöffnung der Kalibrierdüse angeordnet ist. Der Dichtkörper liegt an der Schlauchinnenwand an, wobei in den Raum zwischen dem Dorn, dem Dichtkörper und der Schlauchinnenwand ein Druckmedium einleitbar ist. Den Dorn durchdringt eine Leitung, die nach dem Dichtkörper im Inneren des Schlauches mündet und durch die ein Druckmedium in das Innere des Schlauches eingeleitet wird, um diesen aufzuweiten. Die Wand der Kalibrierdüse wird durch die Kühlvorrichtung gekühlt und ist durch eine Heizvorrichtung beheizbar. Der Dichtkörper ist ganz oder teilweise im Inneren der Kalibrierdüse angeordnet.

Aus der US-PS 3,804,574 ist ein Verfahren zur Herstellung eines Vorschlauchs bekannt, bei dem eine Außenkalibrierung des Vorschlauches im Vakuum erfolgt. Die Außenkalibrierung zeigt insbesondere für Schlauchdurchmesser kleiner als 70 mm gegenüber der Innenkalibrierung Vorteile. Durch ein relativ kleines Querstreckverhältnis von λ_{Q} = 3,4 sind die zu einem Dorn von weniger als 24 mm Durchmesser gehörenden Gestänge bei einer Innenkalibrierung in einer Pinolebohrung der Düse von weniger als 24 mm Durchmesser nicht mehr unterzubringen. Da das Gestänge eine Streckluftzuführung, einen Wasservorlauf, Wasserrücklauf und eine Spülluftzuleitung enthalten muß, ist es offensichtlich, daß der Gestängedurchmesser nicht auf einen Durchmesser von weniger als 24 mm verringert werden kann.

Aus der DE-PS 12 42 851 ist eine Vorrichtung zum Herstellen eines stranggepreßten Schlauches aus isotaktischem Polypropylen mit einem am Spritzkopf einer Strangpresse im Schlauchinneren angeordneten Kalibrierwerkzeug bekannt, das aus senkrecht zur Schlauchachse angeordneten Scheiben besteht. Ein rohrförmiger Mantel umschließt den Schlauch und ist in einem Kühlbad unterhalb der Oberfläche der Kühlflüssigkeit angeordnet. Über den oberen Rand des Mantels fließt Kühlflüssigkeit auf die äußere Oberfläche des Schlauches. Im unteren Bereich ist der Mantel gegen den Zutritt von Kühlflüssigkeit abgedichtet und weist einen Anschluß auf, der mit einer die Kühlflüssigkeit in den Vorratsbehälter fördernden Saugpumpe verbunden ist. Durch das Kalibrierwerkzeug führt eine Druckluftzuführung zur Regulierung des Volumens des Schlauchs in dem Stück zwischen dem Kalibrierwerkzeug und Walzen, die den Schlauch innerhalb des Sammelbeckens zusammenfalten und nach oben hin zum Austritt aus dem Sammelbecken umlenken. Mit dieser Vorrichtung erfolgt eine Innenkalibrierung des Schlauches.

Die in der DE-AS 15 04 050 beschriebene Vorrichtung zur Herstellung von biaxial orientierten thermoplastischen Folien im Blasverfahren weist gleichfalls eine Innenkalibriervorrichtung aus einer oder mehreren Scheiben auf, die eine ein Kühlmedium enthaltende Kühlzone begrenzen, welche am gegenüberliegenden Ende durch eine Dichtung abgeschlossen ist. Der von der Strangpreßdüse aus in den Schlauch hineinragende Dorn enthält drei zueinander koaxiale Rohre für die Zufuhr und Abfuhr von Kühlflüssigkeit in die Kühlzone und die Luftzufuhr in den Schlauch unterhalb der Dichtung.

In der DE-OS 21 36 168 sind ein Verfahren und eine Vorrichtung zur Herstellung eines kontinuierlich stranggepreßten Schlauches beschrieben, wobei der Schlauch von einer Spritzdüse einer Stranpgresse senkrecht nach unten in ein Abschreckbad geführt wird, während die Innenseite des Schlauches durch eine Kühlflüssigkeit gekühlt wird, die im Schlauch umgewälzt wird. Die Innenkalibrierung erfolgt mittels mehrerer Kalibrierscheiben, die senkrecht zur Achse des Schlauches und koaxial zueinander angeordnet sind. Der Druck eines Gases, das über eine Leitung in den Schlauch oberhalb der Kalibrierscheiben eingelassen wird, wird mit Hilfe von Ventilen geregelt. Der Schlauch läuft senkrecht nach unten über die Kalibrierscheiben zu einem Quetschwalzenpaar, das den Schlauch über einen Teil seiner Breite plättet. Dann wird der Schlauch aus dem Abschreckbad nach oben umgelenkt und anschließend aufgewickelt oder einer weiteren Verarbeitung unterzogen.

Aufgabe der Erfindung ist es, ein Verfahren und eine Vorrichtung zum Herstellen eines verstreckten Schlauches aus teilkristallinen Polymeren, die eine hohe Kristallisationstendenz, kleine Schmelzviskosität und/oder niedrige Zugfestigkeit der Schmelze bei Arbeitstemperatur besitzen, in der Weise zu schaffen, daß eine kontinuierliche Schlauchstreckung eines außenkalibrierten Schlauches ermöglicht wird.

Diese Aufgabe wird verfahrensgemäß dadurch gelöst, daß der Vorschlauch am oberen Austrittsende eines Einlaufstücks des Kalibrators mit Wasser außenseitig benetzt wird, daß in der Vakuumzone im Rohrinneren ein Druck pi₁ gleich dem Atmosphärendruck pₐₜₘ herrscht und eine Drucktrennung zu Beginn der Streckung in der Weise vorgenommen wird, daß nach der Drucktrennungsstelle das Rohrinnere mit einem Druck pi₂ größer als der Atmosphärendruck pₐₜₘ beaufschlagt wird und daß das Rohr auf die Strecktemperatur Tₛₜ erwärmt und mit erhöhter Streckgeschwindigkeit v₂ gegenüber der Abzugsgeschwindigkeit v₁ des Vorschlauches zu dem Schlauch gestreckt wird.

Die Weiterbildung des Verfahrens ergibt sich aus den Patentansprüchen 2 bis 6.

Eine Vorrichtung zur Herstellung eines Stranggepreßten, verstreckten, nahtlosen Schlauches aus teilkristallinen Polymeren, der in einem Arbeitsgang kontinuierlich außenkalibriert wird, nach dem Verfahren gemäß den Ansprüchen 1 bis 6, mit einer Ringdüse, einem Kalibrator, einem Vakuumtank, einem Sondenrohr innerhalb eines Vorschlauches, das von der Ringdüse durch den Kalibrator und den Vakuumtank bis über eine Drucktrennungsstelle hinaus verläuft, einem nahe dem düsenfernen Ende auf der Außenseite des Sondenrohres aufsitzenden und gegen die Innenseite eines Rohres anliegenden Dichtungselement als Drucktrennungsstelle innerhalb des zu dem Rohr geformten Vorschlauches zeichnet sich dadurch aus, daß das Dichtungselement zumindest eine Dichtungslippe aufweist und auf das Sondenrohr aufgeschraubt ist, daß einem ersten Bandabzug eine erste Heizkammer zum Erwärmen auf die Strecktemperatur Tₛₜ, ein zweiter Bandabzug, eine zweite Heizkammer zum Wärmefixieren des Rohres und ein dritter Bandabzug nachgeordnet sind, und daß über eine Umlenkrolle der durch den dritten Bandabzug gefaltete Schlauch einer Aufwickelrolle zuführbar ist.

Die vorteilhafte Weiterbildung der Vorrichtung ergibt sich aus den Merkmalen der Patentansprüche 8 bis 16.

Mit der Erfindung können außenkalibrierte Vorschläuche mit Durchmessern von 4 bis 40 mm, die auf Schläuche mit Durchmessern von 12 bis etwa 170 mm streckbar sind, im Durchlauf hergestellt werden, wobei das Ausgangsmaterial Polymere mit hoher Kristallisationstendenz, kleine Schmelzviskosität und/oder niedriger Zugfestigkeit der Schmelze bei Arbeitstemperatur sind.

Die Erfindung wird im folgenden anhand von zeichnerisch dargestellten Ausführungsbeispielen näher erläutert.

Es zeigen:
- Fig. 1: im Diagramm die einzelnen Einheiten einer Vorrichtung zum vertikalen Außenkalibrieren eines Schlauches,
- Fig. 2: einen Längsschnitt durch einen Kalibrator und einen Vakuumtank der Vorrichtung,
- Fig. 3: im Schnitt ein Dichtungselement der Vorrichtung zur Drucktrennung innerhalb des Schlauches zu Beginn der Schlauchstreckung,
- Fig. 4: schematisch im Längsschnitt eine Ringdüse, einen Kalibrator und ein Dichtungselement einer Vorrichtung zum horizontalen Außenkalibrieren eines Schlauches,
- Fig. 5: schematisch in vergrößerter Darstellung den Übergang eines Vorschlauchs von der Ringdüse zu dem Kalibrator der Vorrichtung nach Figur 4,
- Fig. 6: einen Detailausschnitt des Kalibrators nach Figur 4,
- Fig. 7: das Dichtungselement der Vorrichtung nach Figur 4 im Schnitt, und
- Fig. 8: schematisch die Umlenkung eines Schlauches nach dem horizontalen Außenkalibrieren in die Vertikale zum Streckteil der Vorrichtung.

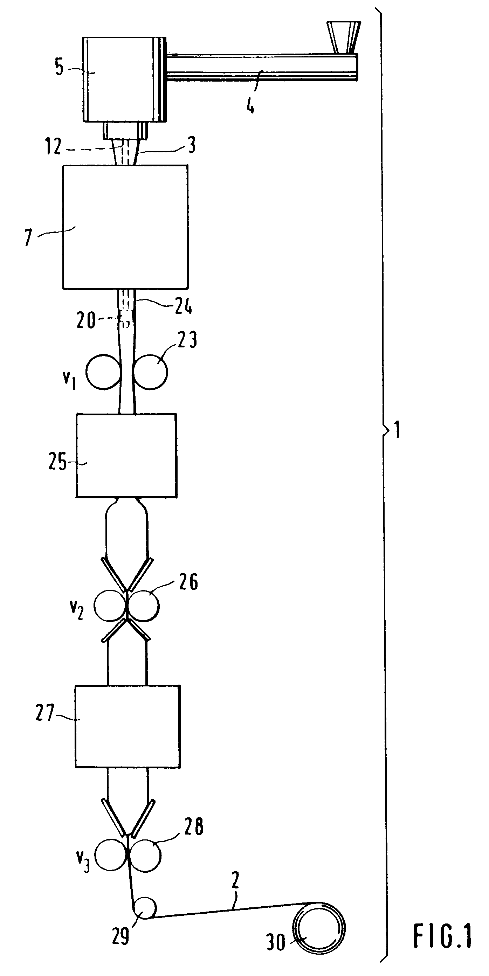

Das Diagramm in Figur 1 zeigt die wesentlichen Stationen bzw. Einheiten einer Vorrichtung 1 zum vertikalen Außenkalibrieren eines Schlauches. Die Vorrichtung 1 umfaßt einen Extruder 4, der eine Ringdüse 5 mit teilkristallinen Polymeren beschickt, aus denen ein- oder mehrschichtige Schläuche, die beispielsweise als Wursthüllen Verwendung finden, extrudiert werden. Aus der Ringdüse 5 tritt vertikal nach unten ein Vorschlauch 3 in einen Kalibrator 7 ein, der teilweise von einem Vakuumtank umgeben ist. Im Inneren des Vorschlauchs 3 erstreckt sich ein Sondenrohr 12, das nahe seinem unteren Ende ein Dichtungselement 20 trägt, das druckmäßig den oberen Teil eines Rohres 24, das aus dem Vorschlauch 3 durch das Kalibrieren entsteht, von dem unteren Rohrteil trennt. Nach dem Passieren des Dichtungselements 20 wird das Rohr 24 durch einen ersten Bandabzug 23 weitertransportiert und durchläuft eine erste Heizkammer 25, in der sich beispielsweise eine Heizvorrichtung in Gestalt eines ringförmigen IR-Strahlers befindet, durch dessen Innendurchmesser der Schlauch hindurchtritt. Der erste Bandabzug 23 zieht beispielsweise das Rohr 24 mit einer Abzugsgeschwindigkeit v₁ ab. Nach der ersten Heizkammer 25 bläht sich der Schlauch infolge der in seinem Inneren sich ausdehnenden Luft auf und wird von einem zweiten Bandabzug 26 mit der Streckgeschwindigkeit v₂ transportiert. Durch die gegenüber der Abzugsgeschwindigkeit v₁ höhere Streckgeschwindigkeit v₂ erfolgt eine Längsstreckung des Schlauches. Im Anschluß daran gelangt der Schlauch in eine zweite Heizkammer 27, die ähnlich zu der Heizkammer 25 aufgebaut ist, und in der eine Thermofixierung des Schlauchmaterials vorgenommen wird. Ein dritter Bandabzug 28 transportiert den thermofixierten Schlauch 2 mit der Geschwindigkeit v₃ über eine Umlenkrolle 29 zu einer Aufwickelrolle 30.

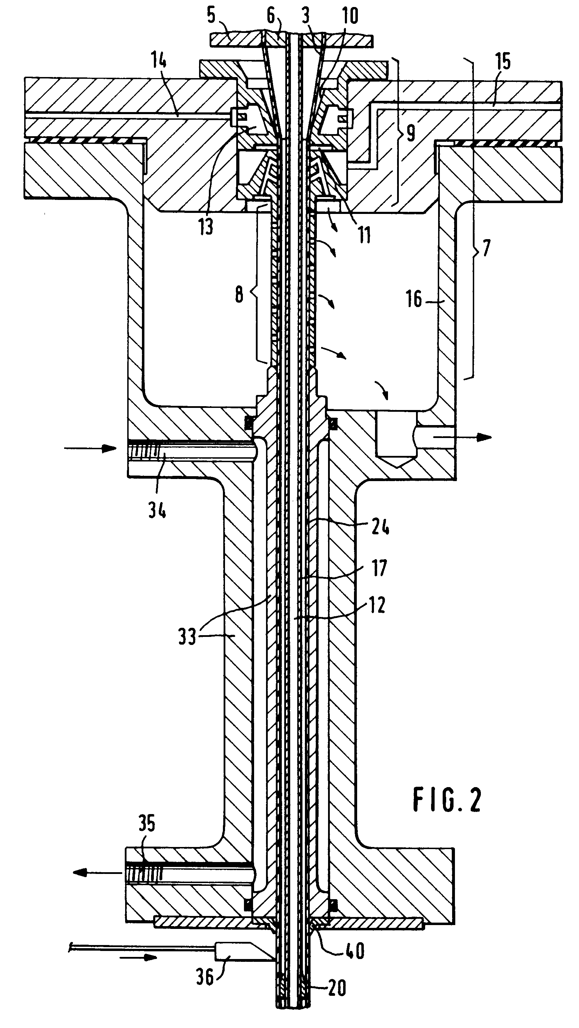

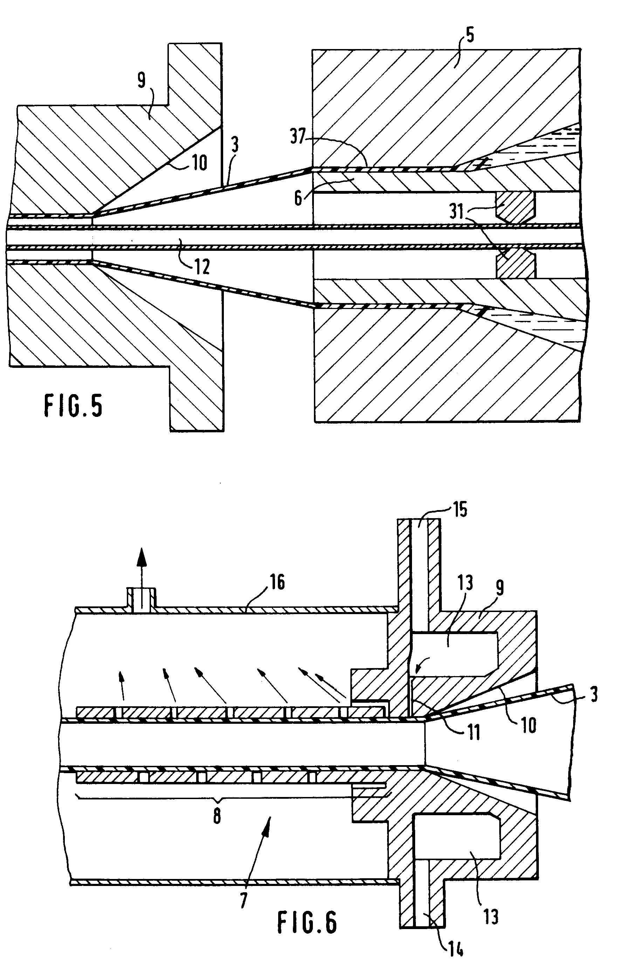

Anhand des Längsschnittes durch den Kalibrator 7 und den Vakuumtank 16 in Figur 2 wird im folgenden das vertikale Außenkalibrieren des Vorschlauchs 3 beschrieben. Der Vorschlauch 3 tritt stranggepreßt und nahtlos aus einem Spalt 37 (Fig. 5) zwischen einem Wendelverteiler bzw. einer Pinole 6 und der Ringdüse 5 in den Kalibrator 7 ein. Der Kalibrator 7 besteht aus einer perforierten Kalibratorhülse 8 und einem Einlaufstück 9, das einen konischen Einlauftrichter 10 aufweist. Das Einlaufstück 9 besitzt einen ringförmigen Hohlraum 13, mit einem Zu- und Ablauf 14 bzw. 15 für ein Kühlmedium, das im allgemeinen Wasser ist. Von dem mit dem Hohlraum 13 verbundenen Ablauf 15 zweigt eine Bypass-Leitung zu einem Ringspalt 11 im Einlaufstück 9 ab. Durch diesen Ringspalt 11 tritt ein Teilstrom an Kühlwasser als Schmierwasser in den Raum zwischen dem Vorschlauch 3 und der Innenwand der Kalibratorhülse 8 aus. Die aus der Ringdüse 5 kommende Schmelze des Vorschlauchs 3 wird in der ersten Formgebung durch den Kalibrator 7 zu einem Rohr 24 geformt.

Die perforierte Kalibratorhülse 8 ist in dem Vakuumtank 16 angeordnet, in welchem ein Unterdruck pₐ₁ herrscht, der außenseitig an der Kalibratorhülse 8 anliegt, so daß durch deren Perforationen Luft und das Schmierwasser auf der Außenseite des Rohres 24 durch den Vakuumtank 16 hindurch abgesaugt werden. Die Luftströmungen durch die Perforationen sind in Figur 2 durch Pfeile angedeutet. Der Unterdruck pₐ₁ hat gegenüber Atmosphärendruck pₐₜₘ einen Druckunterschied im Bereich von 50 bis 300 mbar, je nachdem, wie groß die Saugleistung der Pumpe ist, die an den Vakuumtank 16 angeschlossen ist. Durch den an der Außenseite der Kalibratorhülse 8 anliegenden Unterdruck pₐ₁ wird aus dem Vorschlauch 3 das Rohr 24 geformt, das an der Innenseite der perforierten Kalibratorhülse 8 anliegt und, aufgrund des Schmierwasserfilms zwischen der Innenseite der Kalibratorhülse 8 und der Außenseite des Rohres 24, problemlos abgezogen werden kann. Das Vakuum im Vakuumtank 16 verhindert im übrigen, daß bei einem Abriß des Rohres 24 Kühl- bzw. Schmierwasser aus dem Kalibrator 7 austritt und in die nachgeschaltete erste Heizkammer in der Infrarot-Heizstrecke eindringen kann.

Die weitere Kühlung des Rohres 24 erfolgt durch einen doppelwandigen Kühler 33, der einen Zulauf 34 und einen Ablauf 35 für das Kühlmittel, das im allgemeinen Wasser ist, aufweist. Das Kühlwasser strömt in dem Kühler 33 durch den Raum zwischen den Kühlerwänden hindurch, kommt jedoch nicht direkt in Berührung mit dem Rohr 24, das koaxial zu dem Sondenrohr 12 abgezogen wird, wobei die Innenseite des Rohres 24 im Abstand zu der Außenseite 17 des Sondenrohres 12 verläuft.

Den Kühler 33 schließt eine Austrittsblende 40 ab, unterhalb der eine horizontal verschiebbare Schneid-/Schlitzeinrichtung 36 für den Vorschlauch 3 angeordnet ist. Der Vorschlauch 3 wird nach dem einwandfreien Einlaufen in die Streckzone mittels der Schneid-/Schlitzeinrichtung 36 aufgeschnitten, um ein Dichtungselement auf das Sondenrohr 12 aufzuschrauben.

Das Material des Kalibrators 7 ist ein Metall, wie beispielsweise Messing, wobei der Kalibrator so ausgelegt ist, daß nach Auswechseln der Kalibratorhülse 8 und des Kühlers 33 Vorschläuche von 4 bis 40 mm Durchmesser hergestellt werden können, die dann zu Schläuchen bis zu 170 mm Kaliber gestreckt werden können.

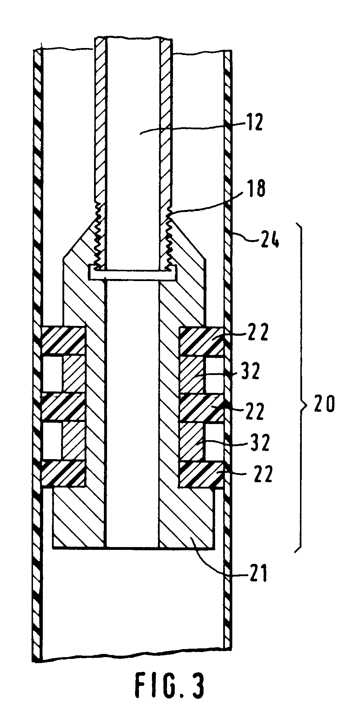

Figur 3 zeigt im Detail den Schnitt durch das Dichtungselement 20 der Vorrichtung nach Figur 1. Das Dichtungselement 20 ist nahe dem düsenfernen Ende des Sondenrohres 12, das ein Außengewinde 18 auf der Außenseite 17 aufweist, aufgeschraubt und dient zur Drucktrennung innerhalb des Rohres 24. Das Dichtungselement 20 besteht aus einem Dichtungskörper 21, der mit dem Außengewinde 18 des Sondenrohres 12 in Eingriff steht. Im Dichtungskörper 21 sind durch Distanzringe 32 voneinander getrennte, zueinander koaxial ausgerichtete Dichtungsscheiben 22 eingesetzt, die an der Innenseite des Rohres 24 als Dichtlippen anliegen und somit die Räume oberhalb und unterhalb der Dichtungsscheiben 22 voneinander druckmäßig trennen.

Das Dichtungselement 20 auf dem Sondenrohr 12 ist innerhalb eines Bereiches, der von der unteren Wand des Vakuumtanks 16 bis zum düsenfernen Ende des Sondenrohres 12 reicht, das nahe des ersten Bandabzugs 23 liegt, positionierbar.

Durch das Sondenrohr 12, das durch die Ringdüse 5 hindurchgeführt ist, strömt ein Gas, im allgemeinen Luft, in das Rohr 24 ein und übt auf dieses unterhalb des Dichtungselements 20 einen Druck pᵢ₂ höher als der Atmosphärendruck aus. Im Rohrinneren oberhalb des Dichtungselements 20 herrscht ein Druck pᵢ₁ gleich dem Atmosphärendruck, während an der Rohraußenseite im Vakuumtank 16, wie schon voranstehend erwähnt wurde, ein Unterdruck pₐ₁ kleiner als der Atmosphärendruck anliegt.

Das Dichtungselement 20 wird auf dem Sondenrohr 12 an einer Stelle plaziert, an der eine plastische Verformung des Kunststoffmaterials des Rohres 24 nicht mehr stattfindet.

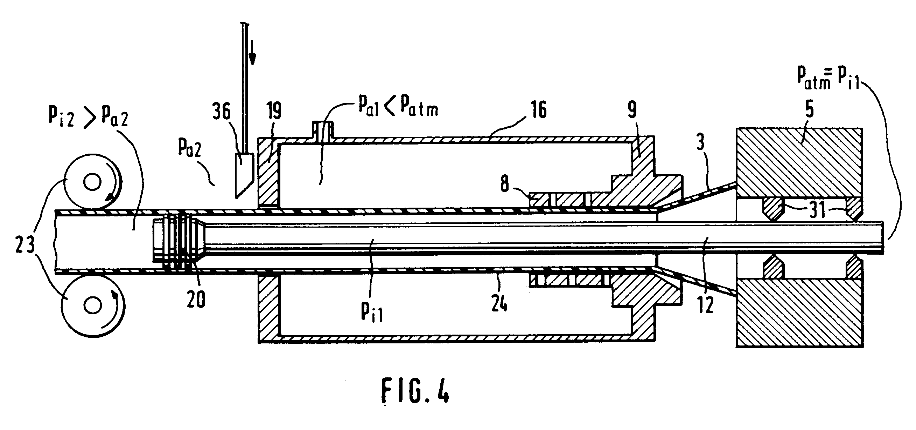

In Figur 4 sind schematisch im Längsschnitt eine Ringdüse 5, die Kalibratorhülse 8, das Einlaufstück 9, der Vakuumtank 16 und das Dichtungselement 20 einer Vorrichtung zum horizontalen Außenkalibrieren eines Schlauches gezeigt. Das Sondenrohr 12 ist in einer Sondenführung 31 innerhalb der Ringdüse 5 waagerecht gelagert, und der Vorschlauch 3 bzw. das aus dem Vorschlauch 3 durch die Außenkalibrierung entstehende Rohr 24 verlaufen koaxial zu dem Sondenrohr 12, das aus dem Vakuumtank bzw. der Vakuumkammer 16 bis nahe an den ersten Bandabzug 23 herausgeführt ist. In Abzugsrichtung des Rohres 24 befindet sich nach einer Austrittsblende 19 des Vakuumtanks 16 eine senkrechte, zur Achse des Rohres 24 verschiebbare Schneid-/Schlitzeinrichtung 36, mit deren Hilfe das Rohr 24 bzw. der Vorschlauch aufschneidbar ist, um das Dichtungselement 20 auf das Außengewinde des Sondenrohres 12 aufschrauben zu können.

Ebenso wie bei der vertikalen Außenkalibrierung des Schlauches gilt auch für die horizontale Außenkalibrierung, daß im Inneren des Rohres 24 vor dem Dichtungselement 20 ein Druck pᵢ₁ gleich dem Atmosphärendruck pₐₜₘ herrscht, während nach dem Dichtungselement 20 im Rohrinneren ein Druck pᵢ₂ größer als der Atmosphärendruck vorliegt. Um zu der Drucktrennung im Rohrinneren vor und nach dem Dichtungselement 20 zu gelangen, wird folgendermaßen vorgegangen. Zunächst wird der Vorschlauch 3 von der Ringdüse 5 durch den Vakuumtank 16 hindurch bis zu dem ersten Bandablauf 23 transportiert, der beispielsweise in nicht dargestellter Weise, ähnlich wie Quetschwalzen, zum Flachlegen des Schlauches angeordnet sein kann. Sobald der Vorschlauch 3 einwandfrei läuft, wird das Sondenrohr 12 durch die Bohrung der Ringdüse 5 bis zum Ende des Vakuumtanks 16 geschoben. Der Vorschlauch 3 wird nach dem Verlassen des Vakuumtanks 16 mittels der Schneid-/Schlitzvorrichtung 36 aufgeschlitzt und in den geöffneten Schlauch das Dichtungselement 20 eingeführt und auf das Außengewinde des Sondenrohres 12 aufgeschraubt. Das Sondenrohr 12 kann dann noch ein Stück über das Ende des Vakuumtanks hinaus vorgeschoben werden. Durch das Dichtungselement ist der Vorschlauch 3 bzw. das Rohr 24 abgeschlossen und zur weiteren Verarbeitung bereit. Die Position des Dichtungselements kann durch Verschieben vom Ende des Sondenrohres 12 bis zur Austrittsblende 19 des Vakuumtanks 16 verstellt werden. Sobald das Rohr 24 durch den zweiten Bandabzug 26 bzw. durch nicht dargestellte Quetschwalzen zum Flachlegen des Rohres 24 verschlossen ist, wird durch das Sondenrohr 12 hindurch der Innenraum des Rohres 24 nach dem Dichtungselement 20 mit einem Druck von bis zu 2 bar beaufschlagt, wodurch die nachfolgende Streckung des Rohres 24 eingeleitet wird.

Figur 5 zeigt schematisch in vergrößerter Darstellung die Ringdüse 5 und das Einlaufstück 9 des Kalibrators der Vorrichtung nach Figur 4. In der Ringdüse 5 befindet sich ein konisch zusammenlaufender Kanal, der mit der Kunststoffschmelze von dem Extruder gefüllt ist. Der Kanal geht in einen parallel zu dem Sondenrohr 12 verlaufenden Spalt 37 über, der eine Spaltbreite zwischen 0,6 bis 0,9 mm aufweist, die sich weitgehend nach den Anforderungen an den Vorschlauch 3 richtet. Aus dem Spalt 37 tritt der extrudierte, nahtlose Vorschlauch 3 aus und gelangt in den Einlauftrichter 10 des Einlaufstücks 9, wobei sich der Durchmesser des Vorschlauchs 3 gegenüber dem Durchmesser des Extrudats aus dem Spalt 37 verringert. Der Vorschlauch 3 kann aus einer oder mehreren Schichten gebildet werden. Die Herstellung eines einschichtigen Vorschlauchs erfolgt mittels eines Wendelverteilers, während für einen mehrschichtigen Vorschlauch eine Pinole zusätzlich eingesetzt wird.

Figur 6 zeigt einen Detailausschnitt des Kalibrators 7 der Vorrichtung nach Figur 4. Die Stelle, an der der Vorschlauch 3 mit dem Einlauftrichter 10 des Einlaufstücks 9 zum ersten Mal in Berührung kommt, muß gut gekühlt sein, darf aber nicht von einem Schmierwasserfilm bedeckt sein. Der Hohlraum 13 des Einlaufstücks 9 wird über den Zulauf 14 mit Kühlmittel, vor allem Kühlwasser, gekühlt, das aus dem Ablauf 15 wieder ausströmt. Mit dem Hohlraum 13 auf der Seite des Ablaufs 15 ist der Ringspalt 11 verbunden, der zu der Oberfläche des Einlaufstücks 9 führt. Über den einstellbaren Ringspalt von 0,05 bis 0,3 mm Spalthöhe gelangt Kühlwasser als Schmierwasserfilm zwischen die Innenseite der Kalibratorhülse 8 und die Außenseite des Vorschlauchs 3. Der Ringspalt 11 wird während des Betriebs empirisch auf seine optimale Spalthöhe bzw. Spaltbreite eingestellt. Die Vakuumkammer 16 umgibt die perforierte Kalibratorhülse 8, an der außenseitig Unterdruck pₐ₁ anliegt.

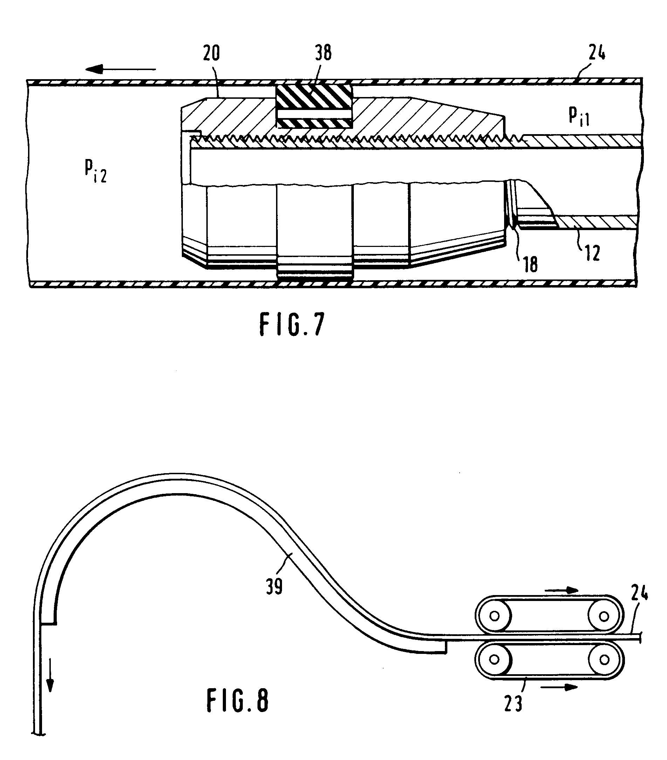

In Figur 7 ist ein Dichtungselement 20 dargestellt, das, abweichend von dem Dichtungselement nach Figur 3, anstelle von Dichtungsscheiben eine einzige elastische Dichtungslippe 38 aufweist, die in das Dichtungselement 20 eingepaßt ist und dichtend gegen die Innenseite des Rohres 24 anliegt. Das Dichtungselement 20 ist auf ein Außengewinde 18 des Sondenrohres 12 aufgeschraubt. Der Innendruck im Rohr 24 vor der elastischen Dichtungslippe 38 entspricht dem Atmosphärendruck, während der Innendruck pᵢ₂ nach dem elastischen Dichtungselement beispielsweise 1,5 bar höher als der Atmosphärendruck gewählt wird. Die Erhöhung des Innendrucks pᵢ₂ erfolgt in der gleichen Weise, wie sie voranstehend schon beschrieben wurde.

In Figur 8 ist die Verbindung zwischen der horizontalen Herstellung des Vorschlauchs bzw. des Rohres 24, wie in Fig. 4 dargestellt, und der vertikalen Verstreckung des Rohres 24 zu dem endgültigen Schlauch schematisch dargestellt. Bei der Verknüpfung der Vorschlauchherstellung und der Verstreckung ist einerseits eine Umlenkung des Schlauchs und andererseits eine Spannungstrennung erforderlich. Zwischen der Bildung des Rohres 24 und der ersten Streckstufe der Vorrichtung muß die Spannungstrennung zwischengeschaltet werden, da anderenfalls der Vorschlauch bei der Flachlegung des Rohres 24 im ersten Bandabzug 23 aus der Ringdüse gezogen würde. Der Bandabzug 23 besteht hier aus zwei gegenläufig zueinander umlaufenden endlosen Bändern, die jeweils über zwei Rollen geführt sind. Der Bandabzug 23 transportiert das unter dem Innendruck pᵢ₂ stehende Rohr 24 schlupffrei und ohne schädliche Deformationen weiter. Die Streckzone arbeitet in vertikaler Richtung und ist analog zu dem Streckbereich ab der ersten Heizkammer 25 in Figur 1 aufgebaut. Für den Übergang von der horizontalen Außenkalibrierung des Rohres 24 zu der vertikalen Streckrichtung ist ein Umlenkteil 39 vorgesehen, das ähnlich einem Schwanenhals ausgebildet ist und als Führung für das Rohr 24 in Richtung der ersten Heizkammer 25 dient. Anstelle dieses Umlenkteils 39 kann auch eine viertelkreisförmige Führung vorgesehen sein, die im einzelnen nicht dargestellt ist. Eine derartige Führung weist im allgemeinen einen Biegeradius von mehr als 600 mm für einen Vorschlauch bzw. ein Rohr 24 mit einem Kaliber von 13 mm auf.

In der Streckzone wird das Rohr 24 auf die Strecktemperatur T_{ST} erwärmt. Dies geschieht in der ersten Heizkammer 25 gemäß Figur 1. Der zweite Bandabzug 26 nach der ersten Heizkammer 25 läuft mit gegenüber der Abzugsgeschwindigkeit v₁ erhöhter Streckgeschwindigkeit v₂, die so eingestellt wird, daß ein materialabhängiger Flächenfaktor λ_{F} für die Streckung im Bereich 2 bis 24, insbesondere 4 bis 12, erreicht wird. Der dritte Bandabzug 28 in Figur 1 läuft mit geringfügig höherer Geschwindigkeit v₃ als die Streckgeschwindigkeit v₂.

## Patentansprüche

1. Verfahren zur Herstellung eines stranggepreßten, verstreckten, nahtlosen Schlauches (2) aus teilkristallinen Polymeren, der in einem Arbeitsgang kontinuierlich außenkalibriert wird, wobei ein Vorschlauch (3) von einer Ringdüse (5) einer Strangpresse vertikal durch einen Kalibrator (7) und eine Vakuumzone (16) geführt und zu einem Rohr (24) geformt wird, das unterhalb der Vakuumzone gekühlt wird und an der Rohraußenseite in der Vakuumzone ein Unterdruck Pₐ₁ kleiner als der Atmosphärendruck pₐₜₘ herrscht, dadurch gekennzeichnet, daß der Vorschlauch (3) am oberen Austrittsende eines Einlaufstücks (9) des Kalibrators (7) mit Wasser außenseitig benetzt wird, daß in der Vakuumzone (16) im Rohrinneren ein Druck pᵢ₁ gleich dem Atmosphärendruck pₐₜₘ herrscht und eine Drucktrennung zu Beginn der Streckung in der Weise vorgenommen wird, daß nach der Drucktrennungsstelle (20) das Rohrinnere mit einem Druck pᵢ₂ größer als der Atmosphärendruck Pₐₜₘ beaufschlagt wird und daß das Rohr (24) auf die Strecktemperatur Tₛₜ erwärmt und mit erhöhter Streckgeschwindigkeit v₂ gegenüber der Abzugsgeschwindigkeit v₁ des Vorschlauches (3) zu dem Schlauch (2) gestreckt wird.

2. Verfahren nach Anspruch 1, dadurch gekennzeichnet, daß die Drucktrennung an einer Stelle vorgenommen wird, an der eine plastische Verformung des Rohres (24) nicht mehr stattfindet.

3. Verfahren nach Anspruch 1, dadurch gekennzeichnet, daß der Druck pᵢ₂ um 0,4 bis 2,0 bar höher als der Atmosphärendruck eingestellt wird.

4. Verfahren nach Anspruch 1, dadurch gekennzeichnet, daß die Streckgeschwindigkeit v₂ so eingestellt wird, daß ein materialabhängiger Flächenfaktor λ_{F} für die Streckung im Bereich 2 bis 24, insbesondere 4 bis 12, erreicht wird.

5. Verfahren nach Anspruch 1, dadurch gekennzeichnet, daß der Unterdruck pₐ₁ in der Vakuumzone (16) 50 bis 300 mbar kleiner als der Atmosphärendruck gewählt wird.

6. Verfahren nach Anspruch 1, dadurch gekennzeichnet, daß der Außendurchmesser des Schlauches (21) 12 bis 170 mm beträgt.

7. Vorrichtung zur Herstellung eines stranggepreßten, verstreckten, nahtlosen Schlauches aus teilkristallinen Polymeren, der in einem Arbeitsgang kontinuierlich außenkalibriert wird, nach dem Verfahren gemäß den Ansprüchen 1 bis 6, mit einer Ringdüse (5), einem Kalibrator (7), einem Vakuumtank (16), einem Sondenrohr (12) innerhalb eines Vorschlauches (3), das von der Ringdüse (5) durch den Kalibrator (7) und den Vakuumtank (16) bis über eine Drucktrennungsstelle hinaus verläuft, einem nahe dem düsenfernen Ende auf der Außenseite (17) des Sondenrohres (12) aufsitzenden und gegen die Innenseite eines Rohres (24) anliegenden Dichtungselement (20) als Drucktrennungsstelle innerhalb des zu dem Rohr (24) geformten Vorschlauches (3), dadurch gekennzeichnet, daß das Dichtungselement (20) zumindest eine Dichtungslippe (22 bzw. 38) aufweist und auf das Sondenrohr (12) aufgeschraubt ist, daß einem ersten Bandabzug (23) eine erste Heizkammer (25) zum Erwärmen auf die Strecktemperatur Tₛₜ, ein zweiter Bandabzug (26), eine zweite Heizkammer (27) zum Wärmefixieren des Rohres (24) und ein dritter Bandabzug (28) nachgeordnet sind, und daß über eine Umlenkrolle (29) der durch den dritten Bandabzug gefaltete Schlauch (2) einer Aufwickelrolle (30) zuführbar ist.

8. Vorrichtung nach Anspruch 7, dadurch gekennzeichnet, daß das Sondenrohr (12) in einer Sondenführung (31) innerhalb der Ringdüse (5) gelagert ist und am düsenfernen Ende ein Außengewinde (18) aufweist, auf das das Dichtungselement (20), bestehend aus einem Dichtungskörper (21), in dem durch Distanzringe (32) getrennte, zueinander koaxiale Dichtungsscheiben (22) eingesetzt sind, aufgeschraubt ist, und daß die Dichtungsscheiben (22) an der Innenseite des Rohres (24) als Dichtlippen anliegen.

9. Vorrichtung nach Anspruch 7, dadurch gekennzeichnet, daß der Kalibrator (7) aus einer perforierten Kalibratorhülse (8) und einem Einlaufstück (9) mit konischem Einlauftrichter (10) besteht und daß das Einlaufstück (9) an dem Ende, das an die Kalibratorhülse (8) anschließt, einen Ringspalt (11) aufweist, durch den ein Teilstrom an Kühlwasser als Schmierwasser in den Raum zwischen dem Vorschlauch (3) und der Kalibratorhülse (8) austritt.

10. Vorrichtung nach Anspruch 9, dadurch gekennzeichnet, daß das Einlaufstück einen ringförmigen Hohlraum (13) mit einem Zu- und Ablauf (14, 15) für Kühlwasser aufweist, und daß der Ringspalt (11) mit diesem Hohlraum (13) verbunden ist.

11. Vorrichtung nach den Ansprüchen 9 und 10, dadurch gekennzeichnet, daß der einstellbare Ringspalt (11) eine Spalthöhe zwischen 0,05 und 0,3 mm hat, und daß die perforierte Kalibratorhülse (8) in dem Vakuumtank (16) angeordnet ist und daß außenseitig an der Kalibratorhülse Unterdruck pₐ₁ anliegt.

12. Vorrichtung nach Anspruch 11, dadurch gekennzeichnet, daß das Dichtungselement (20) auf dem Sondenrohr (12) innerhalb eines Bereiches von einer Austrittsblende (19) des Vakuumtanks (16) bis nahe des ersten Bandabzugs (23) angeordnet ist.

13. Vorrichtung nach Anspruch 7, dadurch gekennzeichnet, daß das Sondenrohr (12) vertikal angeordnet ist und außerhalb des Vakuumtanks (16) einen doppelwandigen Kühler (33) durchläuft, der einen Zu- und Ablauf (34, 35) für Kühlwasser in den und aus dem Raum zwischen den Kühlerwänden aufweist.

14. Vorrichtung nach Anspruch 7, dadurch gekennzeichnet, daß nach der Austrittsblende (19) des Vakuumtanks (16) eine verschiebbare Schneid-/Schlitzeinrichtung (36) für den Vorschlauch (3) angeordnet ist, mit deren Hilfe der Vorschlauch aufschneidbar ist, um das Dichtungselement (20) auf das Sondenrohr (12) aufzuschrauben.

15. Vorrichtung nach Anspruch 7, dadurch gekennzeichnet, daß am düsenfernen Ende des Sondenrohres (12) ein Dichtungselement (20) auf einem Außengewinde (18) aufgeschraubt ist und daß in das Dichtungselement eine einzelne Dichtungslippe (38) eingepaßt ist, die dichtend gegen die Innenseite des Rohres (24) anliegt.

16. Vorrichtung nach Anspruch 13, dadurch gekennzeichnet, daß nach der Austrittsblende (40) des Kühlers (33) eine horizontal verschiebbare Schneid/Schlitzeinrichtung (36) angeordnet ist, mit deren Hilfe der Vorschlauch (3) aufschneidbar ist, um das Dichtungselement (20) auf das Sondenrohr (12) aufzuschrauben.

## Claims

1. A process for the production of an extruded, stretched, seamless tube (2) from partially crystalline polymers, which is continuously calibrated on the outside in one operation, wherein a parison (3) is led from an annular die (5) of an extruder vertically through a calibrator (7) and a vacuum zone (16) and shaped into a tube (24), the tube being cooled underneath the vacuum zone, and a negative pressure pₐ₁ lower than atmospheric pressure (pₐₜₘ) prevailing on the outside of the tube in the vacuum zone, characterized in that the parison (3) is wetted with water on the outside at the upper discharge end of a feed section (9) of the calibrator (7), that, in the vaccum zone (16), a pressure pᵢ₁ equal to atmospheric pressure pₐₜₘ prevails inside the tube, that a pressure separation is performed at the beginning of stretching in such a way that, underneath the pressure separation point (20), the inside of the tube is subjected to a pressure pᵢ₂ greater than atmospheric pressure, and that the tube (24) is heated to the stretching temperature T_{ST} and is stretched at a stretching speed v₂, increased relative to the take-off speed v₁ of the parison (3), to form the tube (2).

2. A process as claimed in claim 1, characterized in that the pressure separation is performed at a point at which a plastic deformation of the tube (24) no longer takes place.

3. A process as claimed in claim 1, characterized in that the pressure pᵢ₂ is set 0.4 to 2.0 bar higher than atmospheric pressure.

4. A process as claimed in claim 1, characterized in that the stretching speed v₂ is set such that a material-dependent area factor λ _{F} for stretching in the range 2 to 24, in particular 4 to 12, is achieved.

5. A process as claimed in claim 1, characterized in that the negative pressure pₐ₁ in the vacuum zone (16) is chosen 50 to 300 mbar lower than atmospheric pressure.

6. A process as claimed in claim 1, characterized in that the outside diameter of the tube (21) is 12 up to 170 mm.

7. Apparatus for the production of an extruded, stretched, seamless tube from partially crystalline polymers, which is continuously calibrated on the outside in one operation, as claimed in the process according to claims 1 to 6, and which comprises an annular die (5), a calibrator (7), a vacuum tank (16), a probe pipe (12) inside a parison (3), which extends from the annular die (5) through the calibrator (7) and the vacuum tank (16) past a pressure separation point, and, close to the end remote from the die of the probe pipe (12), a sealing element (20) for the pressure separation inside the parison (3) shaped into a tube (24), which is mounted on the outside (17) of the probe pipe (12) and bears in a sealing manner against the inside of the tube (24), characterized in that the sealing element (20) possesses at least one sealing lip (22, 38) and is screwed onto the probe pipe (12), that a first heating chamber (25) for heating to the stretching temperature T_{ST}, a second belt take-off (26), a second heating chamber (27) for the heat setting of the tube (24) and a third belt take-off (28) are arranged downstream of the first belt take-off (23), and that the tube (2) folded by the third belt take-off can be sent via a deflection roller (29) to a wind-up roller (30).

8. An apparatus as claimed in claim 7, characterized in that the probe pipe (12) is mounted in a probe guide (31) inside the annular die (5) and has at the end remote from the die an external thread (18), onto which is screwed the sealing element (20), consisting of a sealing member (21), in which mutually coaxial sealing washers (22) separated by spacer rings (32), are inserted, and in that the sealing washers (22) bear against the inside of the tube (24) as sealing lips.

9. An apparatus as claimed in claim 7, characterized in that the calibrator (7) consists of a perforated calibrator bush (8) and a feed section (9) with conical feed funnel (10), and that the feed section (9) has at the end which adjoins the calibrator bush (8) an annular gap (11), through which a partial flow of cooling water is discharged as lubricating water into the space between the parison (3) and the calibrator bush (8).

10. An apparatus as claimed in claim 9, characterized in that the feed section has an annular cavity (13) with an inflow and outflow (14, 15) for cooling water, and that the annular gap (11) is connected to this cavity (13).

11. An apparatus as claimed in claim 9 and 10, characterized in that the adjustable annular gap (11) has a gap height between 0.05 and 0.3 mm, and that the perforated calibrator bush (8) is arranged in the vacuum tank (16) and on the outside bears against the negative pressure pₐ₁.

12. An apparatus as claimed in claim 11, characterized in that the sealing element (20) is arranged on the probe pipe (12) within a region from a discharge orifice plate (19) of the vacuum tank (16) almost up to the first belt take-off (23).

13. An apparatus as claimed in claim 7, characterized in that the probe pipe (12) is arranged vertically and, outside the vacuum tank (16), passes through a double-walled cooler (33), which has an inflow and outflow (34, 35) for cooling water into and out of the space between the cooler walls.

14. An apparatus as claimed in claim 7, characterized in that, after the discharge orifice plate (19) of the vacuum tank (16), a displaceable cutting/slitting device (36) for the parison (3) is arranged, with the aid of which the parison can be cut open in order to screw the sealing element (20) onto the probe pipe (12).

15. An apparatus as claimed in claim 7, characterized in that, at the end remote from the die of the probe pipe (12), a sealing element (20) is screwed onto an external thread (18), and that a single sealing lip (38), which bears in a sealing manner against the inside of the tuber (24), is fitted into the sealing element.

16. An apparatus as claimed in claim 13, characterized in that, after the discharge orifice plate (40) of the cooler (33), a horizontally displaceable cutting/slitting device (36) is arranged, with the aid of which the parison (3) can be cut open in order to screw the sealing element (20) onto the probe pipe (12).

## Revendications

1. Procédé de fabrication d'un tuyau souple extrudé et étiré (2), sans soudure et en polymères semi-cristallins, qui fait l'objet d'un calibrage extérieur continu en une passe, selon lequel, à partir d'une filière annulaire (5) d'une extrudeuse, une ébauche de tuyau souple (3) est guidée verticalement dans un dispositif de calibrage (7) et une zone à dépression (16) et subit un formage donnant un tuyau (24) qui est refroidi au-dessous de la zone à dépression, tandis que, dans cette dernière, il règne sur la face extérieure du tuyau une dépression pₐ₁ inférieure à la pression atmosphérique pₐₜₘ, caractérisé en ce qu'à l'extrémité supérieure de sortie d'une pièce d'entrée (9) du dispositif de calibrage (7), l'ébauche de tuyau souple (3) fait l'objet, sur sa face extérieure, d'une réticulation à l'eau, en ce que, dans la zone à dépression (16), il règne à l'intérieur du tuyau une pression pᵢ₁ égale à la pression atmosphérique pₐₜₘ et il est réalisé au début de l'étirage une isolation de pression de manière telle qu'après l'emplacement d'isolation de pression (20), l'intérieur du tuyau est soumis à une pression pᵢ₂ supérieure à la pression atmosphérique pₐₜₘ et en ce que la température du tuyau (24) est portée à la température d'étirage Tₛₜ et le tuyau (24) est étiré de façon à donner le tuyau souple (2), à une vitesse d'étirage v₂ accrue par rapport à la vitesse d'extraction v₁ de l'ébauche de tuyau souple (3).

2. Procédé suivant la revendication 1, caractérisé en ce que l'isolation de pression est réalisée en un emplacement auquel une déformation plastique du tuyau (24) n'a plus lieu.

3. Procédé suivant la revendication 1, caractérisé en ce que la pression pᵢ₂ est réglée à une valeur supérieure de 0,4 à 2,0 bars à la pression atmosphérique.

4. Procédé suivant la revendication 1, caractérisé en ce que la vitesse d'étirage v₂ est réglée de façon à atteindre, pour l'étirage, un facteur de surface λ_{F}, dépendant du matériau, qui est compris entre 2 et 24, notamment entre 4 et 12.

5. Procédé suivant la revendication 1, caractérisé en ce que la dépression pₐ₁ dans la zone à dépression (16) est choisie à une valeur inférieure de 50 à 300 mbar à la pression atmosphérique.

6. Procédé suivant la revendication 1, caractérisé en ce que le diamètre extérieur du tuyau souple (21) est compris entre 12 et 170 mm.

7. Dispositif de fabrication d'un tuyau souple extrudé et étiré, sans soudure et en polymères semi-cristallins, qui fait l'objet d'un calibrage extérieur continu en une phase, selon le procédé conforme aux revendications 1 à 6, ce dispositif comprenant une filière annulaire (5), un dispositif de calibrage (7), une enceinte à dépression (16), un tube-sonde (12), disposé à l'intérieur d'une ébauche de tuyau souple (3) et s'étendant de la filière annulaire (5) jusqu'au-delà d'un emplacement d'isolation de pression en traversant le dispositif de calibrage (7) et l'enceinte à dépression (16), et un élément d'étanchéité (20) qui prend appui sur la face extérieure (17) du tube-sonde (12) près de l'extrémité éloignée de la filière et est appliqué contre la face intérieure d'un tuyau (24) et qui sert d'emplacement d'isolation de pression à l'intérieur de l'ébauche de tuyau souple (3) ayant subi un formage donnant le tuyau (24), caractérisé en ce que l'élément d'étanchéité (20) comprend au moins une lèvre d'étanchéité (22 ou 38) et est vissé sur le tube-sonde (12), en ce qu'en aval d'un premier dispositif de rouleaux d'appel (23), il est disposé une première chambre de chauffage (25), servant à élever la température à la température d'étirage Tₛₜ, un deuxième dispositif de rouleaux d'appel (26), une seconde chambre de chauffage (27), servant au thermodurcissement du tuyau (24), et un troisième dispositif de rouleaux d'appel (28) et en ce que, par l'intermédiaire d'un rouleau de renvoi (29), le tuyau souple (2) plié par le troisième dispositif de rouleaux d'appel peut être envoyé à une bobine d'enroulement (30).

8. Dispositif suivant la revendication 7, caractérisé en ce que le tube-sonde (12) est guidé dans un guide-sonde (31) à l'intérieur de la filière annulaire (5) et comprend, à l'extrémité éloignée de la filière, un filetage extérieur (18) sur lequel est vissé l'élément d'étanchéité (20), lequel est constitué d'un corps d'étanchéité (21) dans lequel sont montés des disques d'étanchéité (22) de même axe et séparés par des entretoises annulaires (32), et en ce que les disques d'étanchéité (22) sont appliqués sur la face intérieure du tuyau (24) en servant de lèvres d'étanchéité.

9. Dispositif suivant la revendication 7, caractérisé en ce que le dispositif de calibrage (7) est constitué d'un manchon de calibrage (8) perforé et d'une pièce d'entrée (9) comportant un entonnoir conique d'entrée (10) et en ce qu'à l'extrémité qui est raccordée au manchon de calibrage (8), la pièce d'entrée (9) comporte une fente annulaire (11) par laquelle sort un courant partiel d'eau de refroidissement qui sert d'eau de lubrification dans l'espace situé entre l'ébauche de tuyau souple (3) et le manchon de calibrage (8).

10. Dispositif suivant la revendication 9, caractérisé en ce que la pièce d'entrée comprend une cavité annulaire (13) comportant une entrée (14) et une sortie (15) d'eau de refroidissement et en ce que la fente annulaire (11) communique avec cette cavité (13).

11. Dispositif suivant l'une des revendications 9 et 10, caractérisé en ce que la fente annulaire (11) réglable a une hauteur de fente comprise entre 0,05 et 0,3 mm, en ce que le manchon de calibrage (8) perforé est disposé dans l'enceinte à dépression (16) et en ce qu'il s'applique extérieurement sur le manchon de calibrage une dépression pₐ₁.

12. Dispositif suivant la revendication 11, caractérisé en ce que l'élément d'étanchéité (20) est disposé sur le tube-sonde (12) à l'intérieur d'une zone s étendant d'un obturateur de sortie (19) de l'enceinte à dépression (16) jusqu'au voisinage du premier dispositif à rouleaux d'appel (23).

13. Dispositif suivant la revendication 7, caractérisé en ce que le tube-sonde (12) est disposé verticalement et traverse, à l'extérieur de l'enceinte à dépression (16), un dispositif de refroidissement (33) à double paroi qui comporte une entrée d'eau froide (34) conduisant à l'espace situé entre les parois du dispositif de refroidissement et une sortie d'eau de refroidissement (35) partant de cet espace.

14. Dispositif suivant la revendication 7, caractérisé en ce qu'en aval de l'obturateur de sortie (19) de l'enceinte à dépression (16), il est disposé un dispositif à entailler/sectionner (36) qui est agencé de façon à pouvoir être déplacé en translation et est destiné à l'ébauche de tuyau-souple (3) et à l'aide duquel l'ébauche de tuyau souple peut être sectionnée, afin de visser l'élément d'étanchéité (20) sur le tube-sonde (12).

15. Dispositif suivant la revendication 7, caractérisé en ce qu'à l'extrémité du tube-sonde (12) qui est éloignée de la filière, un élément d'étanchéité (20) est vissé sur un filetage extérieur (18) et en ce qu'une lèvre d'étanchéité (38) unique est emboîtée dans l'élément d'étanchéité, cette lèvre d'étanchéité (38) étant appliquée d'une manière étanche contre la face intérieure du tuyau (24).

16. Dispositif suivant la revendication 13, caractérisé en ce qu'en aval de l'obturateur de sortie (40) du dispositif de refroidissement (33), il est disposé un dispositif à entailler/sectionner (36) qui est agencé de façon à pouvoir être déplacé en translation horizontale et à l'aide duquel l'ébauche de tuyau souple (3) peut être sectionnée, afin de visser l'élément d'étanchéité (20) sur le tube-sonde (12).
